# EUROPEAN PATENT SPECIFICATION

(11) **EP 0 423 188 B1**
(45) Date of publication and mention of the grant of the patent: **19.01.1994**
(21) Application number: 89907873.7
(22) Date of filing: 29.06.1989
(51) Int. Cl.: G06F 15/21, G06K 17/00

(54) **ARRANGEMENT FOR MARKING SYSTEM**
ANORDNUNG FÜR EIN MARKIERUNGSSYSTEM
AGENCEMENT POUR UN DISPOSITIF DE MARQUAGE

(30) Priority: 06.07.1988 SE 8802531
(43) Date of publication of application: 24.04.1991
(73) Proprietor: Esselte Meto International GmbH, 64646 Heppenheim (DE)
(72) Inventor: Hellquist, Magnus, S-412 68 Goteborg (SE); Muchow, Bjorn, S-416 60 Goteborg (SE); Erngren, Klas, S-403 15 Goteborg (SE)
(74) Representative: Abrams, Michael John
(86) International application number: SE8900372
(87) International publication number: WO9000775

(56) References cited:
- EP-A- 0 200 473
- WO-A-86/02477
- DE-A- 3 135 028
- US-A- 4 002 886
- US-A- 4 139 147
- US-A- 4 500 880
- US-A- 4 521 677

## Description

The present invention relates to an arrangement for a computerized electronic marking system which comprises in the system cooperative units with information-carrying elements which can be supplied with programmable basic information. The arrangement is in this connection of the type which makes it possible that the basic information can be modified via wireless connections between one or more transmitter and the units. The respective modification information transmitted by the transmitter(s) can be initiated using computer equipment, e.g. a PC. Modification information means in this case information which modifies, extends and/or supplements the said basic information.

Electronic marking systems with so-called independently operating units are previously known, and are described in WO-A-86/02477 and DE-A-3135028. Such independently operating units are supplied with modification information via the wireless connection from a manoeuvrable piece of equipment which comprises one or more transmitter. The independently operating unit is an entirely passive component and upon the supply of modification information it must be assumed that the receiving unit functions as intended and that the information supplied is the correct information. There is of course the possibility of visual control but in certain cases there can be difficulties in carrying out such a control.

It is also previously known to execute the wireless connection for e.g. IR transmission, which has limitations, however, because of its small angles of reception in the IR receivers, the requirement for a large number of transmitters and wiring upon the use of the system in large rooms etc.

With electronic marking systems of this category there is today a requirement for a totally integratable and technically simple system, in which automatic control of the different parts of the system can be achieved in a simple manner. Such a system presupposes the use of an entirely different type of marking units than the above-mentioned types of independently operating units.

Each unit must in effect be able to function as an active unit within the system and automatically give up its status information upon information modification, updating etc. Consequently it is required that the system operates with a feedback function of a type known per se and which supplies the controlling and updating equipment with information which can be used by the equipment for functionally relating the units in the system. In such a manner the units can be incorporated in the monitoring and control functions in an entirely different manner within the system than was previously possible. The new system is consequently more convenient and reliable and can, together with other features which are suggested by the present invention, be given a relatively technically simple construction.

The new arrangement as claimed can be considered as being characterized by, among other things, one or more of the functions of each unit being made dependent upon one or more functional state of one or more of the remaining units or external function(s). A second characteristic is that each transmitter, via an antenna loop which leads past the units in question, transmits code information, which is modulated onto a low frequency carrier wave and individually assigned to the units, together with the modification information, in addition to which each unit is assigned a tuning circuit and amplification and demodulation element for the modulation frequency used in order to make possible on the one hand reception of its individual code information when this appears in the antenna loop and on the other hand its activation for reception of the modification information sent together with the individual code information. Finally each unit is assigned a transmission element with oscillator element which is activatable upon completed reception of the respective modification information in the unit for transmission of answer information in the form of a signal frequency which can be modulated onto the said carrier wave and which can be detected via the antenna loop in a receiver, connected to the latter, for establishing a relationship in the system with the functional state of remaining units in the cooperation of the units.

In one embodiment, each transmitter transmits the code information with the associated modification information to the units in a predetermined or random order. The system is in this connection arranged to have available action instructions for taking action on a unit which does not fulfil a function assigned to it. Each transmitter can in this connection be arranged so that, in the event of an error indication in the answer information, e.g. in the form of signal frequency not appearing from the unit in question, it will interrupt the transmission of subsequent code information and modification information until the unit or the erroneous function within the unit has been acted upon. After this the transmitter can continue with the transmission of the code and modification information.

The invention also takes into account the construction itself of the unit. Each unit can have a short ruler-shaped construction with a relatively small depth, e.g. a depth of 4-8 mm, advantageously approx. 6 mm. The length can be e.g. 40 mm and the width approx. 20 mm. One or more units in the system can be suppliable with power wholly or partly by a solar cell battery. The said battery can interact with a conventional battery and upon disconnection of the solar cell battery, automatic limiting of the power supplied takes place in that only parts of the power-consuming elements of the unit remain connected.

Each unit has one or more display element which is respectively divided up for its information. Each unit carries on a front surface, e.g. next to the said display element, a bar code label which gives details of goods, products etc. which are associated with the unit. The system can in this connection include a register which belongs to or is connected to the computer equipment. In the register, the goods, products etc. are catalogued by means of the bar code. In one embodiment, the basic information for the units can be transferred from the said register to the unit by means of elements which recognize bar codes, e.g. a reading pen, which are run over the bar code on the said bar code label.

In other embodiments of the inventive idea, two or more units can be physically joined together, e.g. via elements supporting an antenna. The units joined together in this manner can have certain elements in common and e.g. be arranged so that activatability of the first unit presupposes a connection or closure function in the second unit.

The system is designed advantageously so that it operates with a transmission cycle, in which each unit is assigned a time interval, the length of which depends upon the number of units in the system/part system. During the first part of each time interval, coded signals appear with a code construction for code and modification information which corresponds to that which applies for the standardized bar code, in which thirteen bits are attributed to the identification of the unit and three bits to the grouping information in cataloguing. A number of bits for each piece of modification information follows the said code information. During the second part of the time interval, which can comprise a very short part of the total length of the time interval, e.g. approx. 0.05 sec., the unit transmits its characteristic signal frequency for e.g. answer information. The low frequency carrier wave can be assigned a frequency between 25 and 100 kHz. The carrier wave is advantageously frequency modulated.

By means of the above suggestions, an interference-resistant electronic marking system with a functionally reliable and technically simple construction is obtained, in which active cooperative units are totally integrated in the system. The electronic labelling system can be made with a design which is associated with the remaining equipment in the store or corresponding labelling system.

A for the present suggested embodiment of an arrangement which has the characterizing features of the invention is described below with simultaneous reference to the attached drawings in which
- Figure 1: shows in principle the total electronic system with associated active and cooperative units,
- Figure 2: shows in perspective obliquely from above left an example of the construction of each unit, the unit comprising three different displays for three different pieces of information and a support surface for a bar code label, the information in which can be transferred to the unit by means of elements which transfer bar codes,
- Figure 3: shows in principle the construction of each unit in a single version,
- Figure 4: shows in principle an example of the construction of units in a double version,
- Figure 5: shows in principle the construction of a programming unit with a low frequency transmitter and low frequency receiver and associated modulation circuits, and
- Figure 6: shows in graph form the frequency/time function for reception and transmission of the units.

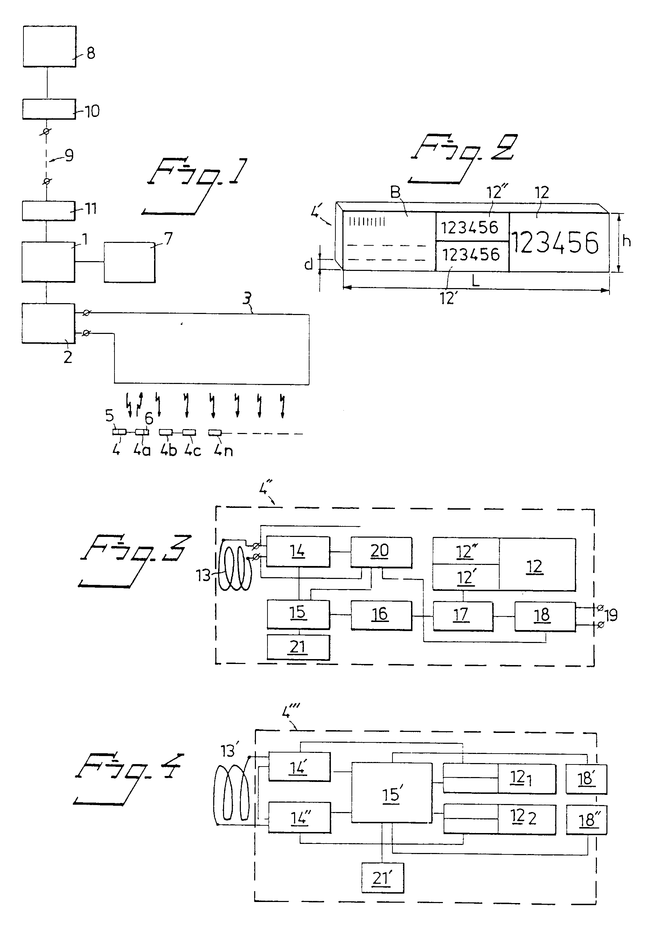

Figure 1 shows an electronic marking system for use in stores, warehouses or in other connections where it is desirable to distribute and visually control visible information in places which are physically separate and e.g. covered with goods. The system includes programmable receiving and transmitting equipment 1 and 2, to which an antenna loop 3 is connected which leads into the room in question or similar. The loop is drawn past the said physically separate places in the space (the room) and can be accommodated in a ceiling, floor or run in a suitable manner in the room. The transmitting and receiving equipment operates at low frequency, e.g. within the range 10-100kHz. Modulation is carried out advantageously by frequency modulation. The equipment operates with digital pulses and time division. In association with the antenna loop, a number of units 4, 4a, 4b, 4c ... 4n are arranged in physically separate places. The number of units can vary within wide limits and the system also functions with very large numbers of units. The system can itself be made up of modular part systems which are respectively assigned transmitting and receiving elements and antenna loop, but which are controllable as a whole with common control equipment. The units are coupled and tuned to the antenna loop 3 and are positioned at an optimum distance from the antenna loop for appropriate reception and transmission in a two-way communication. The equipment 1, 2 transmits via the antenna loop code information, which is modulated onto a low frequency carrier wave and individually assigned to the units, and with this subsequent modification and control information, which supplements or replaces information which is already in the respective unit. Each unit has a tuning circuit and amplification and demodulation element, indicated with 5, of known type. Each unit is also provided with a transmission element with associated oscillator element, indicated with 6, by means of which the unit can form part of the said two-way communication with the equipment 1, 2. Answer information from each unit can be modulated onto the carrier wave in the antenna loop 3 and is detected in the equipment 1, 2. Two or more units can share common equipment, e.g. control element, power supply etc.

Appropriate modification information for the different units can be entered using computer equipment 7, e.g. a PC, which is positioned in the room in question. If the store or the like forms part of a chain of several stores, modification and control information, e.g. in association with price campaigns or the like, can be entered from controlling computer equipment, the transfer from the controlling point being effected via the general telecommunication network 9 and modem equipment 10, 11 in known manner. This information can also be two-way.

Each unit can in such a manner be integrated and coordinated with the pricing in its entirety and automatic information is received in the system from the respective store shelf. Pricing operates concurrently and is integrated and the information on a unit is directly functionally related to the information on other or remaining units. The electrical power state in each unit is followed up and acted upon. Errors occurring in each unit are picked up immediately for action before the subsequent operation is completed etc. The computer equipment can give listed statements of units which do not give up answer information upon information modification and information follow-up of the units. The reciprocal interaction can also be effected in an error action mode for error-listed units which are acted upon successively, the action on one unit being carried out before the next unit is acted upon and so on. In one embodiment, one unit is supervisory and differs from other units by functioning as a large price labelling board set up in the room. The system provides coordination in labelling of the prices, which labelling is to correspond both on the general board and on the labels (the units) on the shelves or similar. The units can draw information from the board or vice versa. An exchange of information is thus presupposed between the board and the units.

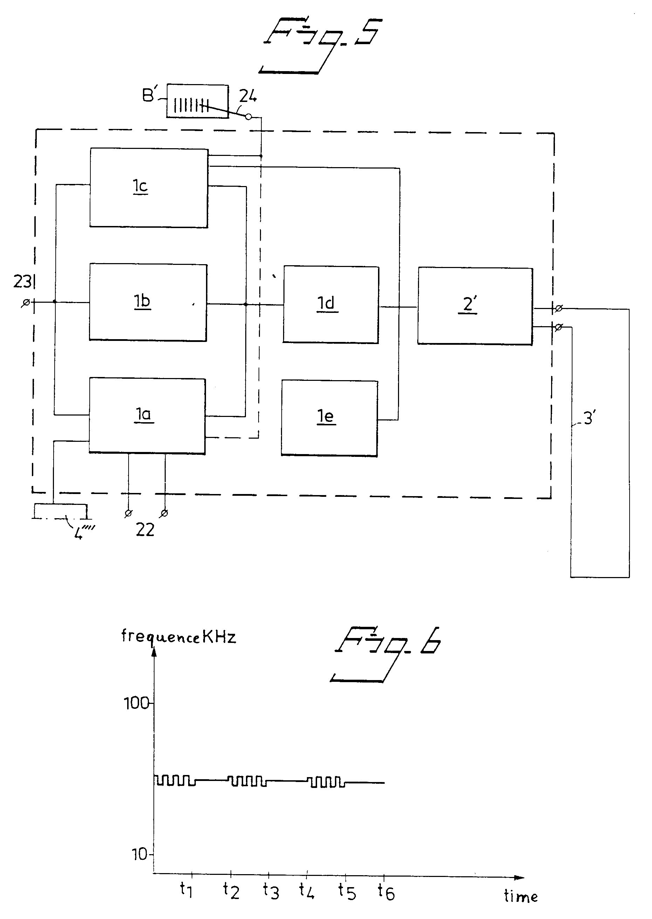

Figure 2 shows an example of the construction of a unit 4' which in terms of design is adapted to other pricing equipment (manual labels) in a relevant store, room etc. Externally there is no difference between the electronic and manual labels. Externally each unit has the front side provided with at least one display 12. In the example shown, three displays 12, 12' and 12'' are included for displaying the respective information (price information).

The unit 4' is made with space for a bar code label B for standardized (EAN) bar code with 13 bits (bars) attributed to goods identification and 3 bits to group division of the goods. The label also has wording for the name of the goods etc. The unit is furthermore optimally dimensioned as far as the dimensions h, L and d (see above) are concerned in terms of legibility, handling etc.

An example of the internal construction of the unit 4'' is shown in Figure 3. The display units 12, 12' and 12'' are made in a custom design with a three level display. The unit has an antenna circuit 13 connected to high and low pass filters 14. Connected to the part 14 is a monitoring and control circuit 15 which is in turn connected to a memory 16 with a latch function. The display units 12, 12' and 12'' are driven by a drive unit 17 with a multiplexer which supplies the display crystals with power in a multiplexed mode. The memory 14 is connected to the part 17. The unit is provided with an electrical power supply circuit 18 which can include solar cell elements. The circuit 18 can include or be connected, via connection 19, to a conventional battery, the solar cell battery then acting as a back-up. When the electrical power supply is running low and a predetermined voltage level cannot be maintained, a signal is activated in the circuit 18, e.g. by means of a flip-flop, which gives an indication of an unacceptable power supply state.

The unit is provided with transmission elements 20, by means of which information transmissions from the unit can be transmitted. The information from the unit can comprise answer information (receipt), e.g. in connection with control and pricing, information that electrical power is running low etc. In the case of insufficient electrical power in the unit, the said signal initiates a transmission to this effect, during the appropriate time period of the unit, at the same time as disconnection of parts of the power consumption of the unit is carried out. In this connection only circuits necessary for the functioning of the unit are supplied with power, e.g. memory circuits, transmission element circuits etc. The unit is also provided with an electronic change-over switch 21 which switches the unit into reception and transmission modes. In the reception mode the unit receives via the antenna 13 information which is coded to correspond to the said bar code. The code includes an individual piece of information assigned to the unit, made up of a total of 16 bits, of which 13 bits are for the identification of the goods (unit identification) and 3 bits for associated goods grouping information. The individual code information brings about activation of the part 15 which activates the memory and change-over circuits 16 and 21 respectively. The memory content can then be controlled, modified, supplemented etc. with a piece of information following the said code information, here referred to as control and modification information. After reception in the memory, any modification information is transferred to the display units 12, 12' and 12'' via the drive unit 17. The change-over switch 21 is arranged so that after the reception mode it switches the unit over into the transmission mode, in which the transmission element 20 is activated. The change-over switch can include a time circuit which is activated in connection with the activation of the unit. After a predetermined time, the change-over switch switches over automatically to transmission mode. When control or modification information has been received correctly, an answer signal is transmitted via the transmission elements 20 and the antenna and the filter circuits, which signal is advantageously of very short duration, e.g. 0.05 sec. Information regarding any deficiency in electrical power is also short. Control of the electrical power status of the unit can be effected frequently in the system, e.g. daily.

If no answer information leaves the unit after information, enquiries etc., has been received, the system takes this to mean that an error has occurred in the unit which is placed on the error list, acted upon etc. When answer information is given up, the unit reverts to its normal state or its non-activated state until the next time that the said code and modification and control information appears and so on. In its normal state the unit draws very little power. A signal leaving the unit is modulated onto the carrier wave in the antenna loop 3 and is detected in the unit 1 (Figure 1).

The unit 4''' in Figure 4 is executed for a double or multiple version in which the equipment in each unit is served by common circuits 13', 15' and 21'. In this case both the reception element and the transmission element are integral in the part 15'. The display units 12₁ and 12₂ are individual, as are battery supplies 18', 18'' and filter circuits 14', 14''. Operation presupposes that performance of a function in a first unit is dependent upon the state in a second unit and vice versa.

Figure 5 shows blocks 1 and 2 according to Figure 1, unit 1 of which is in Figure 5 divided into the parts 1a, 1b, 1c, 1d and 1e. The part 2' corresponds to 2. The part 1c is connected to the computer 7 and modem 11 respectively in Figure 1 via the connection 22. Electrical power to the said parts is connected via the connection 23 (e.g. network supply).

1a comprises a data programming unit, 1b a data conversion unit (adapter circuit) and 1c a control and block division unit with signal reception circuits. Appropriate information (e.g. pricing information) with regard to programming and control is programmed into and read out in the unit 1a. The unit 1c is connected to a switching unit and carries out time division of the information digitally. Each unit is assigned a time period for its reception and transmission in the time cycle of the system. Time periods (the time intervals) depend upon among other things the number of units in the system. The units 1a, 1b and 1c are connected to a frequency modulator 1d which in turn is connected to the low frequency amplifier and the low frequency transceiver 2'. The code, modification and control information assigned to the units is transmitted, modulated onto a low frequency carrier wave, via the unit 2'. The unit 2' receives and detects answer information and other information from the units in its reception circuit. Transmission and reception can take place in a predetermined or random order with regard to the units.

According to Figure 6, frequencies within the range 10-100kHz can be used for the carrier wave.
Advantageously a frequency within the range 25-100kHz is selected, e.g. 35kHz. In the Figure time periods t₁-t₆ are indicated. The time periods t₁ and t₂ are assigned to a first unit, the time periods t₃ and t₄ are assigned to a second unit, the time periods t₅ and t₆ are assigned to a third unit and so on.

The time period t₁ for the time assigned to the first unit in the time cycle of the system comprises a reception mode in which the unit is ready to receive its individual code information, which consists of 13 + 3 bits, and subsequent control or modification information of a predetermined and here not specified number of bits. The time period t₂ for the first unit comprises a transmission mode, during which answer information is to go out to the controlling units in the system.

By means of the above-mentioned coupling of bar-coding (European standard) and the chosen coding for information in the electronic system, a natural relationship is obtained between the above-mentioned label details on the unit, which can be provided with a suitable bar code label B' (in Figure 5), the information on which can be easily introduced into the marking system by reading off with elements 5 which process bar codes. In Figure 5 the information from the label B' is introduced into the unit 1c. Alternatively or in addition, the information can be transferred to the unit 1a. Upon the transfer of the bar code information to the system, each unit 4'''' can by means of temporary connection to the unit 1 (Figure 1), e.g. to the unit 1a (Figure 5) within it, be provided with basic information which can be directly transferred from the label B' by means of the reading element 5. This basic information is supplied to the unit before it is placed on the shelf or similar. Updating, control etc. of this basic information can subsequently take place in accordance with the above. The basic information can consist of an identification (code) assigned to the unit, which identification is not changed as long as the marking can be related to goods or a place assigned to it.

The invention is not restricted to the embodiment indicated above by way of example but can be modified within the scope of the following claims.

## Claims

1. A computerized electronic marking system which comprises units (4a, 4b ... 4n) comprising an information-carrying element (12, 12', 12'') which can be supplied with programmable basic information which can be modified via wireless connections between one or more transmitter and the units, the modification information transmitted by the respective transmitter being initiatable using computer equipment (7), each transmitter (1) transmitting code information individually assigned to the units, together with the modification information, characterized in that:
(1) the system includes at least one unit a predetermined function of which is dependent upon the corresponding functional state of one or more of the remaining units;
(2) each transmitter (1) transmits information via an antenna loop which leads past the units in question;
(3) the code information is modulated onto a low frequency carrier wave;
(4) each unit is assigned a tuning circuit and amplification and demodulation element (5) for the modulation frequency used in order to make possible on the one hand reception of its individual code information when this appears in the antenna loop (3) and on the other hand its activation for reception of the modification information sent together with the individual code information; and
(5) each unit is assigned a transmission element including an oscillator element (6) which is activatable upon completed reception of the respective modification information in the unit and which serves for transmission of answer information in the form of a signal frequency which can be modulated onto the said carrier wave and which can be detected via the antenna loop in a receiver (2'), connected to the latter, whereby the transmitted answer information for each of the units establishes a status record in the system relating to the functional state of all of the units.

2. A computerized electronic marking system which comprises units (4a, 4b ... 4n) comprising an information-carrying element (12, 12', 12'') which can be supplied with programmable basic information which can be modified via wireless connections between one or more transmitter and the units, the modification information transmitted by the respective transmitter being initiatable using computer equipment (7), each transmitter (1) transmitting code information individually assigned to the units, together with the modification information, characterized in that:
(1) the system includes at least one unit a predetermined function of which is dependent upon a parameter external to the unit;
(2) each transmitter (1) transmits information via an antenna loop which leads past the units in question;
(3) the code information is modulated onto a low frequency carrier wave;
(4) each unit is assigned a tuning circuit and amplification and demodulation element (5) for the modulation frequency used in order to make possible on the one hand reception of its individual code information when this appears in the antenna loop (3) and on the other hand its activation for reception of the modification information sent together with the individual code information; and
(5) each unit is assigned a transmission element including an oscillator element (6) which is activatable upon completed reception of the respective modification information in the unit and which serves for transmission of answer information in the form of a signal frequency which can be modulated onto the said carrier wave and which can be detected via the antenna loop in a receiver (2'), connected to the latter, whereby the transmitted answer information for each of the units establishes a status record in the system relating to the functional state of all of the units.

3. A system according to claim 1, characterized in that the ability of each unit to receive said modification information is made dependent on one or more functional state of one or more of the remaining units.

4. A system according to claim 3, characterized in that the ability of each unit to respond to said modification information is made dependent on an address code which is programmed into each of the units, and in that each unit is arranged to respond to transmitted information when this contains the address code specific to the unit.

5. A system according to claim 4, characterized in that each unit has a unique address code.

6. A system according to claim 4, characterized in that a preselected group of units share a common address code.

7. A system according to any preceding claim, characterized in that each transmitter (1) transmits the code information with the associated modification information to the units in a predetermined or random order and that the system has available action instructions for taking action on a unit which does not fulfil a function assigned to it.

8. A system according to any preceding claim, characterized in that each transmitter (1) is arranged so that, in the event of an error indication in the answer information, e.g. in the form of a signal frequency not appearing from the unit in question, it will interrupt the transmission of subsequent code information and modification information until the unit or its erroneous function has been acted upon, after which the transmitter continues with the said transmission.

9. A system according to any of the preceding claims, characterized in that one or more, advantageously all, of the units are supplied with power wholly or partly by an element which converts light energy to electrical energy, e.g. a solar cell battery (18).

10. A system according to claim 9, characterized in that upon inadequate operation of the element converting light energy to electrical energy, only parts of the power-consuming elements of the unit remain connected.

11. A system according to any of the preceding claims, characterized in that each unit has a short ruler-shaped construction with a depth of 4-8 mm, advantageously approx. 6 mm, and a construction or design which conforms to other equipment e.g. manual labels, in the relevant store or similar.

12. A system according to any of the preceding claims, characterized in that each unit has one or more display element (12, 12', 12'') which is respectively divided up for its information and that each unit carries a bar code label (B') which gives details of goods, products etc. which are associated with the unit, and that from a register, which belongs to or is connected to the computer equipment and in which the goods, products etc. are catalogued by means of the bar code, the basic information can be transferred to the unit by means of elements which read bar codes, e.g. a reading pen.

13. A system according to any of the preceding claims, characterised in that two or more units are physically joined together, e.g. via elements (13') supporting an antenna; in that at least one predetermined functional component (13', 15', 21') of the joined units is shared between the joined units; and in that the joined units are arranged so that activation of the first of the joined units serves to activate the other joined units.

14. A system according to any of the preceding claims, characterized in that each unit in the transmission cycle of the system is assigned a time interval (t₁, t₂), the length of which depends upon the number of units in the system or in a part system within the system, that during the first part (t₁) of the time interval, the code construction of the said code and modification information corresponds to that which applies for the standardized bar code, in which thirteen bits are attributed to the identification of the unit and three bits relate to the grouping information for the goods, products etc., and a number of bits for modification information follows the code information, and that during the second part (t₂) of the time interval, which comprises a very short part of the total length of the time interval, e.g. 0.05 sec., the said characteristic signal frequency for the unit is transmitted.

15. A system according to any of the preceding claims, characterized in that the carrier wave has a frequency between 25 and 100 kHz, and is advantageously approx. 35 kHz, and that the modulation frequency comprises frequency modulation.

## Patentansprüche

1. Computerisiertes elektronisches Auszeichnungssystem, das Einheiten (4a, 4b, ... 4n) mit einem informationstragenden Element (12, 12', 12'') aufweist, die mit einer programmierbaren Grundinformation versehbar sind, welche über drahtlose Verbindungen zwischen einem oder mehreren Transmitter(n) und den Einheiten änderbar ist, wobei die von dem (den) entsprechenden Transmitter(n) übermittelte Änderungsinformation von einer Computereinrichtung (7) bereitbar ist, jeder Transmitter (1) eine den Einheiten individuell zugewiesene Codeinformation übermittelt und zwar zusammen mit der Änderungsinformation, dadurch gekennzeichnet,
(1) daß das System mindestens eine Einheit beinhaltet, worin eine vorbestimmte Funktion vom entsprechenden Funktionszustand einer verbliebenen Einheit oder mehrerer verbliebener Einheiten abhängt;
(2) daß jeder Transmitter (1) über eine Antennenschleife, die an den fraglichen Einheiten vorbeigeht, eine Information übermittelt,
(3) daß die Codeinformation auf eine niederfrequente Trägerwelle moduliert ist;
(4) daß jeder Einheit ein Stimmkreis- sowie Verstärker- und Demodulationselement (5) zur Frequenzmodulation zugewiesen ist, damit einerseits ein Empfang von deren individueller Codeinformation möglich ist, tritt diese in der Antennenschleife auf, und andererseits sie für den Empfang der Änderungsinformation, die zusammen mit der individuellen Codeinformation gesandt wird, aktiviert wird, und
(5) daß jeder Einheit ein Transmissionselement, beinhaltend ein Oszillatorelement (6), zugewiesen ist, das nach vollständigem Empfang der entsprechenden Änderungsinformation in der Einheit aktivierbar ist und dazu dient, in Form einer Signalsequenz, die auf die Trägerwelle moduliert werden kann, die Antwortinformation zu übermitteln, welche über die Antennenschleife in einem Empfänger (2'), der mit der letzteren verbunden ist, erfaßbar ist, wobei die übermittelte Antwortinformation für jede der Einheiten eine Statusaufnahme in dem System etabliert, was sich auf den Funktionszustand von allen Einheiten bezieht.

2. Computerisiertes elektronisches Auszeichnungssystem, das Einheiten (4a, 4b, ... 4n) mit einem informationstragenden Element (12, 12', 12'') aufweist, die mit einer programmierbaren Grundinformation versehbar sind, welche über drahtlose Verbindungen zwischen einem oder mehreren Transmitter(n) und den Einheiten verändert werden kann, wobei die von dem (den) entsprechenden Transmitter(n) übermittelte Änderungsinformation von einer Computereinrichtung (7) bereitbar ist, jeder Transmitter (1) eine den Einheiten individuell zugewiesene Codeinformation übermittelt und zwar zusammen mit der Änderungsinformation, dadurch gekennzeichnet,
(1) daß das System mindestens eine Einheit aufweist, worin eine vorbestimmte Funktion von einem Parameter extern der Einheit abhängig ist;
(2) daß jeder Transmitter (1) über eine Antennenschleife, die an den fraglich Einheiten vorbeigeht, eine Information übermittelt;
(3) daß die Codeinformation auf eine niederfrequente Trägerwelle moduliert ist;
(4) daß jeder Einheit ein Stimmkreis- sowie Verstärker- und Demodulationselement (5) für die Modulationsfrequenz zugewiesen ist, damit einerseits der Empfang von deren individueller Codeinformation möglich ist, tritt diese in der Antennenschleife (3) auf, und sie andererseits für den Empfang der Änderungsinformation, die zusammen mit der individuellen Codeinformation gesendet wird, aktiviert wird; und
(5) daß jeder Einheit ein Transmissionselement, beinhaltend ein Oszillatorelement (6), zugewiesen ist, das nach vollständigem Empfang der entsprechenden Änderungsinformation in der Einheit aktiviert wird und dazu dient, in Form einer Signalfrequenz, die auf eine Trägerwelle moduliert werden kann, die Antwortinformation zu übermitteln, welche über eine Antennenschleife in einem Empfänger (2'), der mit der letzteren verbunden ist, erfaßt werden kann, wobei die übermittelte Antwortinformation für jede der Einheiten eine Statusaufnahme in dem System etabliert, was sich auf den Funktionszustand von allen Einheiten bezieht.

3. System nach Anspruch 1, dadurch gekennzeichnet, daß die Fähigkeit einer jeden Einheit, die Änderungsinformation zu empfangen, abhängt vom Funktionszustand der einen oder der mehreren verbliebenen Einheit(en).

4. System nach Anspruch 3, gekennzeichnet durch die Fähigkeit einer jeden Einheit, auf die Änderungsinformation zu antworten und zwar abhängig von dem Adreßcode, der in jeder der Einheiten programmiert ist, und daß jede Einheit so beschaffen ist, daß sie auf die übermittelte Information, enthält sie den für die Einheit spezifischen Adreßcode, antworten kann.

5. System nach Anspruch 4, dadurch gekennzeichnet, daß jede Einheit einen einzig ausgegebenen Adreßcode besitzt.

6. System nach Anspruch 4, dadurch gekennzeichnet, daß eine vorausgewählte Gruppe von Einheiten sich einen gemeinsamen Adreßcode teilen.

7. System nach irgendeinem vorhergehenden Anspruch, dadurch gekennzeichnet, daß jeder Transmitter (1) die Codeinformation mit der zugehörigen Änderungsinformation an die Einheiten in einer vorbestimmten oder wahlfreien Ordnung übermittelt, und daß das System verfügbare Handlungsanweisungen besitzt, damit für eine Einheit, die nicht die zugewiesene Funktion erfüllt, Maßnahmen getroffen werden.

8. System nach irgendeinem vorhergehenden Anspruch, dadurch gekennzeichnet, daß jeder Transmitter (1) so angeordnet ist, daß im Fall einer Fehleranzeige in der Antwortinformation - wenn von der fraglichen Einheit keine Signalfrequenz erscheint - die Übermittlung der nachfolgenden Code- und Änderungsinformation unterbrochen wird, bis die Einheit oder seine fehlerhafte Funktion behandelt worden ist, wonach der Transmitter mit der Übermittlung fortfährt.

9. System nach irgendeinem der vorhergehenden Ansprüche, dadurch gekennzeichnet, daß eine Einheit oder mehrere, vorteilhafterweise alle Einheiten mit Energie versorgt werden, ganz oder teilweise, von einem Element, das Lichtenergie in elektrische Energie umwandelt, beispielsweise von einer Solarzellenbatterie (18).

10. System nach Anspruch 9, dadurch gekennzeichnet, daß bei einer ungemäßen Betätigung des Elements, das Lichtenergie in elektrische Energie umwandelt, nur Teile der energieaufnehmenden Elemente der Einheit angeschlossen bleiben.

11. System nach irgendeinem der vorhergehenden Ansprüche, dadurch gekennzeichnet, daß jede Einheit einen kurzen linealartigen Aufbau besitzt mit einer Tiefe von 4 bis 8 mm, vorzugsweise von ca. 6 mm, und einen Aufbau oder eine Gestaltung, die mit einer anderen Einrichtung zusammenpaßt, beispielsweise mit Handmarkierungen in dem betreffenden Laden oder dgl.

12. System nach irgendeinem der vorhergehenden Ansprüche, dadurch gekennzeichnet, daß jede Einheit ein - oder mehrere - Sichtelement(e) (12, 12', 12'') hat, das entsprechend für seine Information unterteilt ist, und daß jede Einheit eine Strichcodemarkierung (B') trägt, die Details der Artikel, der Produkte, etc., angibt, welche mit der Einheit verbunden ist, und daß aus einem Register, das zu einer Computereinrichtung gehört oder damit verbunden ist und in dem die Artikel, die Produkte, etc., mittels des Strichcodes katalogisiert sind, die Grundinformation auf die Einheit mit Elementen, die Strichcodes lesen, beispielsweise mit einem Lesestift, übertragen wird.

13. System nach irgendeinem der vorhergehenden Ansprüche, dadurch gekennzeichnet, daß zwei oder mehrere Einheiten physikalisch miteinander verbunden sind, beispielsweise über antennentragende Elemente (13') und daß mindestens ein vorbestimmtes Funktionsbauteil (13', 15', 21') der verbundenen Einheiten von den verbundenen Einheiten gemeinsam genutzt wird, und daß die verbundenen Einheiten so angeordnet sind, daß eine Aktivierung der ersten Einheit der verbundenen Einheiten dazu dient, die anderen angeschlossenen Einheiten zu aktivieren.

14. System nach irgendeinem der vorhergehenden Ansprüche, dadurch gekennzeichnet, daß jeder Einheit im Transmissionskreis des Systems ein Zeitintervall (t₁, t₂) zugewiesen ist, dessen Länge von der Zahl der Einheiten in dem System, oder in einem Systemteil des System, abhängt, daß während des ersten Teils (t₁) des Zeitintervalls der Codeaufbau der Code- und Änderungsinformation dem entspricht, was für den Standardstrichcode gilt, wobei dreizehn Bits für die Identifikation der Einheit reserviert sind, drei Bits sich auf die Gruppeninformation der Artikel, der Produkte, etc., beziehen, und auf die Codeinformation eine Zahl von Bits für die Änderungsinformation folgt, und daß während des zweiten Teils (t₂) des Zeitintervalls, das einen sehr kurzen Teil der Gesamtlänge des Zeitintervalls umfaßt, beispielsweise 0,05 Sekunden, die charakteristische Signalfrequenz für die Einheit übermittelt wird.

15. System nach irgendeinem der vorhergehenden Ansprüche, dadurch gekennzeichnet, daß die Trägerwelle eine Frequenz zwischen 25 und 100 kHz besitzt, vorzugsweise ca. 35 kHz, und daß die Modulationsfrequenz eine Frequenzmodulation aufweist.

## Revendications

1. Système de marquage électronique informatisé qui comprend des unités (4a, 4b ... 4n) comportant un élément porteur d'information (12, 12', 12'') auquel peut être fournie une information de base programmable pouvant être modifiée par des liaisons sans fils entre un ou plusieurs émetteurs et les unités, l'information de modification émise par l'émetteur respectif pouvant être initialisée par utilisation d'un équipement à base d'ordinateur (7), chaque émetteur (1) émettant une information de code individuellement affectée aux unités en même temps que l'information de modification, caractérisé en ce que:
(1) le système comporte au moins une unité dont une fonction prédéterminée dépend de l'état fonctionnel correspondant de l'une ou plusieurs des unités restantes;
(2) chaque émetteur (1) émet de l'information par l'intermédiaire d'une antenne cadre qui émet au-delà des unités en question;
(3) l'information de code est modulée sur une onde porteuse à basse fréquence;
(4) à chaque unité est affecté un circuit d'accord et un élément d'amplification et de démodulation (5) pour la fréquence de modulation utilisée afin de permettre d'une part la réception de son information de code individuelle lorsque celle-ci apparaît dans l'antenne cadre (3) et d'autre part, son activation pour la réception de l'information de modification envoyée en même temps que l'information de code individuelle; et
(5) à chaque unité est affecté un élément d'émission comportant un élément oscillateur (6) qui peut être activé lors de l'achèvement de la réception de l'information de modification respective dans l'unité et qui sert à émettre une information de réponse sous la forme d'une fréquence de signal qui peut être modulée sur ladite onde porteuse et qui peut être détectée par l'antenne cadre dans un récepteur (2') connecté à cette dernière, de façon que l'information de réponse émise pour chacune des unités établisse dans le système un enregistrement d'état, qui décrit l'état fonctionnel de toutes les unités.

2. Système de marquage électronique informatisé qui comprend des unités (4a, 4b ... 4n) comportant un élément porteur d'informations (12, 12', 12'') auquel peut être fournie une information de base programmable pouvant être modifiée par des liaisons sans fils entre un ou plusieurs émetteurs et les unités, l'information de modification émise par l'émetteur respectif pouvant être initialisée par utilisation d'un équipement à base d'ordinateur (7), chaque émetteur (1) émettant une information de code individuellement affectée aux unités en même temps que l'information de modification, caractérisé en ce que:
(1) le système comporte au moins une unité dont une fonction prédéterminée dépend d'un paramètre externe à l'unité;
(2) chaque émetteur (1) émet de l'information par l'intermédiaire d'une antenne cadre qui émet au-delà des unités en question;
(3) l'information de code est modulée sur une onde porteuse à basse fréquence;
(4) à chaque unité est affecté un circuit d'accord et un élément d'amplification et de démodulation (5) pour la fréquence de modulation utilisée afin de permettre d'une part la réception de son information de code individuelle lorsque celle-ci apparaît dans l'antenne cadre (3) et d'autre part, son activation pour la réception de l'information de modification envoyée en même temps que l'information de code individuelle; et
(5) à chaque unité est affecté un élément d'émission comportant un élément oscillateur (6) qui peut être activé lors de l'achèvement de la réception de l'information de modification respective dans l'unité et qui sert à émettre un information de réponse sous la forme d'une fréquence de signal qui peut être modulée sur ladite onde porteuse et qui peut être détectée par l'intermédiaire de l'antenne cadre d'un récepteur (2') connecté à cette dernière, de façon que l'information de réponse émise pour chacune des unités établisse dans le système un enregistrement d'état décrivant l'état fonctionnel de toutes les unités.

3. Système selon la revendication 1, caractérisé en ce que l'aptitude de chaque unité à recevoir ladite information de modification est amenée à dépendre d'un ou plusieurs états fonctionnels d'une ou plusieurs des unités restantes.

4. Système selon la revendication 3, caractérisé en ce que l'aptitude de chaque unité à répondre à ladite information de modification est amenée à dépendre d'un code d'adresse qui est programmé dans chacune des unités, et en ce que chaque unité est adaptée à répondre à l'information émise lorsque celle-ci contient le code d'adresse correspondant à l'unité.

5. Système selon la revendication 4, caractérisé en ce que chaque unité possède un code d'adresse unique.

6. Système selon la revendication 4, caractérisé en ce qu'un groupe présélectionné d'unités partage un code d'adresse commun.

7. Système selon l'une quelconque des revendications précédentes, caractérisé en ce que chaque émetteur (1) émet vers les unités l'information de code avec l'information de modification qui lui est associée dans un ordre prédéterminé ou aléatoire et en ce que le système dispose d'instructions d'intervention pour effectuer une intervention sur une unité qui n'exécute pas la fonction qui lui est affectée.

8. Système selon l'une quelconque des revendications précédentes, caractérisé en ce que chaque émetteur (1) est conçu pour que, en cas d'indication d'une erreur dans l'information de réponse, par exemple sous la forme de l'absence d'une fréquence de signal émanant de l'unité en question, il interrompe l'émission de l'information de code et l'information de modification suivantes jusqu'à ce qu'une intervention ait été faite sur l'unité ou sa fonction erronée, l'émetteur poursuivant ensuite ladite émission.

9. Système selon l'une quelconque des revendications précédentes, caractérisé en ce qu'une ou plusieurs des unités, et de préférence, la totalité d'entre elles, sont alimentées en électricité entièrement ou partiellement par un élément qui convertit de l'énergie lumineuse en énergie électrique, comme par exemple une batterie de cellules solaires (18).

10. Système selon la revendication 9, caractérisé en ce que lors d'un fonctionnement inadéquat de l'élément convertissant l'énergie lumineuse en énergie électrique, seules certaines parties des éléments consommateurs d'électricité de l'unité restent connectées.

11. Système selon l'une quelconque des revendications précédentes, caractérisé en ce que chaque unité présente une structure ayant la forme d'une règle courte d'une profondeur de 4-8 mm et de préférence, d'environ 6 mm, et en ce qu'elle présente une structure ou une forme adaptée à celle d'autres équipements tels que des étiquettes manuelles, utilisés dans le magasin considéré ou dans des conditions similaires.

12. Système selon l'une quelconque des revendications précédentes, caractérisé en ce que chaque unité comporte un ou plusieurs éléments d'affichage (12, 12', 12'') respectivement divisés en plusieurs zones d'information, en ce que chaque unité porte une étiquette à code-barre (B') donnant des détails sur certains articles, produits, etc., qui sont associés à l'unité, et en ce qu'à partir d'un registre, qui appartient ou est connecté à l'équipement à base d'ordinateur dans lequel les articles, produits, etc., sont répertoriés au moyen du code-barre, l'information de base peut être transférée vers l'unité au moyen d'éléments qui lisent des codes-barre tels qu'un stylet de lecture.

13. Système selon l'une quelconque des revendications précédentes, caractérisé en ce que deux ou plusieurs unités sont physiquement reliées l'une à l'autre, comme par exemple par l'intermédiaire d'éléments (13') servant de support à une antenne; en ce qu'au moins un composant fonctionnel prédéterminé (13', 15', 21') des unités reliées est partagé entre les unités reliées; et en ce que les unités reliées sont disposées de façon que l'activation de la première des unités reliées serve à activer les autres unités reliées.

14. Système selon l'une quelconque des revendications précédentes, caractérisé en ce qu'à chaque unité du cycle d'émission du système, est affecté un intervalle de temps (t₁, t₂) dont la longueur dépend du nombre d'unités du système ou d'un sous-ensemble du système, en ce que pendant la première partie (t₁) de l'intervalle de temps, la structure dudit code et de l'information de modification correspond à celle qui est utilisée pour le code-barre normalisé, dans lequel treize bits sont attribués à l'identification de l'unité et trois bits concernent l'information de regroupement des articles, produits, etc., et dans lequel un certain nombre de bits concernant l'information de modification suivent l'information de code, et en ce que pendant la seconde partie (t₂) de l'intervalle de temps, qui représente une très petite partie de la longueur totale de l'intervalle de temps, par exemple 0,05 s, ladite fréquence de signal caractéristique de l'unité est émise.

15. Système selon l'une quelconque des revendications précédentes, caractérisé en ce que l'onde porteuse a une fréquence comprise entre 25 et 100 kHz et de préférence, de 35 kHz, et en ce que la fréquence de modulation comprend une modulation de fréquence.
